# EUROPEAN PATENT SPECIFICATION

(11) **EP 2 366 132 B1**
(45) Date of publication and mention of the grant of the patent: **23.09.2015**
(21) Application number: 08878315.4
(22) Date of filing: 18.11.2008
(51) Int. Cl.: G05D 3/12, B66B 1/30, H02J 3/14

(54) **ON DEMAND ELEVATOR LOAD SHEDDING**
ON-DEMAND-AUFZUGS-ENTLASTUNG
DÉLESTAGE DE CHARGE D'ÉLÉVATEUR À LA DEMANDE

(43) Date of publication of application: 21.09.2011
(73) Proprietor: Otis Elevator Company, Farmington, CT 06032 (US)
(72) Inventor: VERONESI, William A., Farmington, Connecticut 06032 (US); OGGIANU, Stella M., Farmington, CT 06032 (US)
(74) Representative: Hughes, Andrea Michelle
(86) International application number: PCT/US2008/012873
(87) International publication number: WO 2010/059138

(56) References cited:
- EP-A2- 0 762 598
- WO-A1-2007/042603
- JP-A- 2000 255 918
- US-A1- 2001 017 240
- US-A1- 2007 255 461
- US-A1- 2008 114 811
- US-B2- 6 415 892
- US-B2- 6 516 922
- US-B2- 7 275 622

## Description

### BACKGROUND

The present invention relates to operation of elevator systems. In particular, the present invention relates to operation of an elevator system during a time period when a demand of electrical energy from a power utility exceeds generating capacity.

Power utilities generate electrical power and distribute that power over a power distribution grid to customers. Power is supplied to residential, commercial, office, manufacturing, and other buildings of small to very large size.

The demand for electrical energy from customers occasionally exceeds generating capacity of the power utilities on the grid. An example may occur in midsummer, during periods of relatively high heat, when high electrical energy consumption occurs through the operation of air conditioning equipment. Under such conditions, the power utilities that distribute power over the grid have few attractive options. A power utility can lower the voltage on the grid in an attempt to lower power consumption, but this has several problems. First, lowering the voltage can damage equipment attached to the grid. Second, for some old, and for many newer electrical devices attached to the grid, voltage is automatically compensated, so that actual power demand is not decreased.

Another option is to shut off sections of the power distribution grid. This action, however, cuts off power to both essential and nonessential power equipment on those sections of grid that are shutoff. The result is a so-called "rolling blackout."

A more desirable solution is to selectively remove equipment from the grid without causing major disruption to grid power customers. The selective removal (or load shedding) can be done by public announcements requesting customers to turn off nonessential loads during periods of high electrical demand. That approach depends upon the message being received by customers, and the customers complying with the request.

It is desirable for a power utility to have the ability to disconnect certain nonessential loads remotely. This feature is available for some heating ventilation and air conditioning (HVAC) systems. Power utilities can selectively and remotely change thermostat settings in buildings of selected customers in order to reduce or remove HVAC or certain internal building loads. Those customers typically benefit by reduced utility rates, or some other incentive from the power utility.

Elevators can represent a significant fraction of the power demand of a building. Unlike an HVAC system, the typical elevator system cannot be simply disconnected from the utility power grid without adversely effecting building operations. If the power utility could turn off the elevator system without warning, elevator cars could be stopped between floors, and passengers trapped within those cars until power is restored. The ability for a power utility to remove elevator loads without impacting the operation of a building has not been available.

EP0762598 shows an elevator system according to the state of the art.

### SUMMARY

An elevator system with a secondary power storage device is capable of automatically shifting between utility grid power, a combination of utility grid power and secondary (grid-independent) power, and secondary power only upon request from a power utility. When a request to reduce electrical demand of a building is received, power to the elevator system from a power distribution system that delivers power from the power utility is reduced, and the secondary power storage device is connected to the elevator system. During the time that the request to reduce electrical demand of the building is in effect, the elevator system operates using power from the secondary power storage device alone or in conjunction with reduced grid power. When the request to reduce the electrical load ends, the elevator system receives increased power from the power utility.

### BRIEF DESCRIPTION OF THE DRAWINGS

The Figure is a block diagram illustrating a building receiving electrical power from a power utility, and having an elevator system that is capable of switching to a grid-independent source of electrical energy upon request of the power utility.

### DETAILED DESCRIPTION

The Figure is a block diagram of power distribution system 10, which includes power utility 12, power distribution system or grid 14, and building 16, which represents one of many customers of power utility 12 that receive electrical energy from power distribution grid 14. Building 16 includes energy management system 18, non-elevator electrical loads 20, and elevator system 22 (which includes converter 24, DC power bus 26, inverter 28, hoist motor 30, elevator car 32, counterweight 34, roping 36, controller 38, and grid-independent power source 40).

Building 16 receives its primary electrical power from power distribution grid 14. Non-elevator loads 20 include various electrical systems and electrically powered systems within building 16. Loads 20 may include, for example, HVAC systems, lighting systems, electronic equipment such as computers and other office and business equipment, manufacturing equipment, and other electrical loads depending upon the nature of the use of building 16. For example, in a manufacturing plant, loads 20 will typically include motors and other electrically powered equipment used in manufacturing processes.

Power converter 24 and power inverter 28 are connected by power bus 26 to form a regenerative elevator drive. Power distribution grid 14 provides electrical power to power converter 24 under normal operating conditions. Power converter 24 is a three-phase power inverter that is operable to convert three-phase AC power from grid 14 to DC power. In one embodiment, power converter 24 comprises a plurality of power circuits that are connected to controller 38 to receive pulse width modulation (PWM) gating pulses. Controller 38 controls the power circuits to convert the three-phase AC power from grid 14 to DC output power. The DC output power is provided by power converter 24 on power bus 26. It is important to note that while grid 14 has been described as delivering three-phase AC power, in some cases the power available from grid 14 may be a single phase AC power or even DC power.

The power circuits of power converter 24 also allow DC power on power bus 26 to be inverted and provided to grid 14. In one embodiment, controller 38 employs pulse width modulation (PWM) to produce gating pulses so as to periodically switch the transistors of power converter 24 to provide a three-phase AC power signal to grid 14. This regenerative configuration reduces the power demand by up to building 16 on grid 14.

Power inverter 28 is a three-phase power inverter that is operable to invert DC power from power bus 26 to three-phase AC power. Power inverter 28 comprises a plurality of power circuits. Controller block 38 controls the power circuits to invert the DC power on power bus 26 to three-phase AC output power. The three-phase AC power at the outputs of power inverter 28 is provided to hoist motor 30. In one embodiment, controller 38 employs PWM to produce gating pulses to periodically switch transistors of power inverter 28 to provide three-phase AC power to hoist motor 30. Controller 38 may vary the speed and direction of movement of elevator car 32 by adjusting the phase, frequency and magnitude of the gating pulses to power inverter 28.

In addition, the power circuits of power inverter 28 are operable to rectify power that is regenerated when movement of elevator car 32 and counterweight 34 drives hoist motor 30. For example, if hoist motor 30 is generating power, controller 38 controls the transistors in power inverter 28 to allow the regenerated power to be converted from AC to DC and provided to DC power bus 26.

Hoist motor 30 controls the speed and direction of movement between elevator car 32 and counterweight 34. The power required to drive hoist motor 30 varies with the acceleration and direction of elevator car 32, as well as the load in elevator car 32. For example, if elevator car 32 is being accelerated, run up with a load greater than the weight of counterweight 34 (i.e., heavy load), or run down with a load less than the weight of counterweight 34 (i.e., light load), power is required to drive hoist motor 30. If elevator car 32 is leveling or running at a fixed speed with a balanced load, it may be using a lesser amount of power. If elevator car 32 is being decelerated, running down with a heavy load, or running up with a light load, elevator car 32 and counterweight 34 drive hoist motor 30. In this case, hoist motor 30 regenerates three-phase AC power that is converted to DC power by power inverter 28 under the control of controller 38. The converted DC power may be returned to grid 14, supplied to grid-independent power source 40 for storage, and/or dissipated in a dynamic brake resistor (not shown) connected to power bus 26.

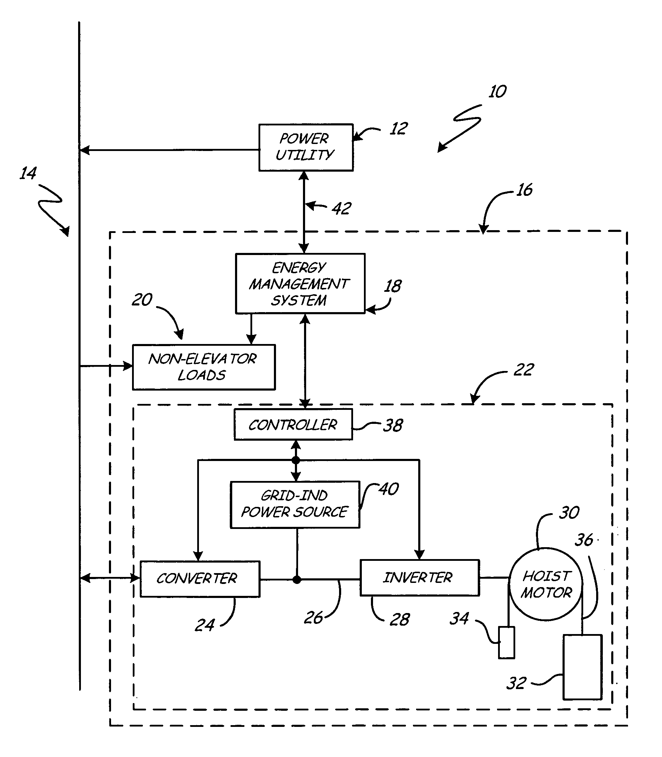

It should be noted that while a single hoist motor 30 is shown in FIG. 1, elevator system 22 can include multiple hoist motors 30, cars 32, and counterweights 34. For example, a plurality of power inverters 28 may be connected in parallel to power bus 26 to provide power to a plurality of hoist motors 30. In addition, it should be noted that while grid-independent power source 40 is shown connected to DC power bus 26, power source 40 could alternatively be connected to one phase of the three phase input of power converter 24.

Grid-independent power source 40 may be an energy storage system, or may be a backup power source such as a generator. Grid-independent power source 40 may include one or more devices capable of storing electrical energy that are connected in series or parallel. In some embodiments, power source 40 includes at least one supercapacitor, which may include symmetric or asymmetric supercapacitors. In other embodiments, power source 40 includes at least one secondary or rechargeable battery, which may include any of nickel-cadmium (NiCd), lead acid, nickel-metal hydride (NiMH), lithium ion (Li-ion), lithium ion polymer (Li-Poly), iron electrode, nickel-zinc, zinc/alkaline/manganese dioxide, zinc-bromine flow, vanadium flow, and sodium-sulfur batteries, or other commercially available batteries. In other embodiments, other types of electrical or mechanical devices, such as flywheels, can be used to store energy. Power source 40 may include one type of storage device or may include combinations of storage devices.

Controller 38 controls operation of converter 24, inverter 28, and grid-independent power source 40. It may also receive feedback signals from converter 24, inverter 28, and power source 40, or from sensors associated with those devices. Controller 38 also controls when elevator system 22 will operate using power from power distribution grid 14, and when elevator 22 will operate using power supplied by grid-independent power source 40.

In system 10 shown in the Figure, power utility 12 has the ability to request that building 16 reduce power demand on grid 14. Communication link 42 allows power utility 12 to communicate with energy management system 18. Communication link 42 may be, for example, an internet connection, a phone line connection, or wireless network connection such as a cell phone or pager type connection.

Under conditions when the overall demand for electrical energy exceeds the generating capacity of power utility 12, a request may be sent over communication link 42 to building 16 to turn off certain loads, or to modify operation so that electrical power demand is reduced. For example, in response to a request from power utility 12, energy management system 18 may provide different control set points to HVAC systems operating within building 16, so that energy consumption is reduced. In some cases, nonessential devices or systems among loads 20 may be turned off entirely until the request from power utility 12 is no longer in effect.

In the case of elevator system 22, any reduction in consumption of grid power should not interrupt elevator service so that passengers are stranded on floors or trapped in an elevator car that is stopped between floors. When energy management system 18 receives a request from power utility 12 to reduce power demand on grid 14, it provides a signal to controller 38 of elevator system 22. Controller 38 will then determine whether it is possible for elevator system 22 to switch to grid-independent operation using power from power source 40. In addition, controller 38 may estimate, based upon signals from grid-independent power source 40, how long elevator system 22 may operate in a grid-independent mode. Controller 38 monitors the state of any energy storage or independent energy supply used by grid-independent power source 40 in order to determine whether to accept a request from energy management system 18 to switch from grid-dependent to grid-independent operation. For example, when grid-independent power source 40 is an electrical energy storage system, controller 38 may monitor voltage, current, and temperature to determine a state-of-charge of the storage system, from which a determination of available energy (and estimated operating time) can be made.

During grid-independent operation, controller 38 may disable converter 24, or may open a switch, so that converter 24 cannot receive power from grid 14. Controller 38 also connects grid-independent power source 40 to DC power bus 26 or to an input converter 24.

During grid-independent operation, controller 38 continues to monitor energy available from grid-independent power source 40. When available energy drops below a predefined or estimated limit, controller 38 signals energy management system 18 that it is no longer capable of grid-independent operation, and will transition elevator system 22 back to grid-dependent operation. Depending on the request received by energy management system 18 over communication link 42, and the state of power available on grid 14, controller 38 may cause elevator system 22 to safely shut down, rather than operating with insufficient power from grid 14. Alternatively, elevator system 22 may continue to operate in a regenerative mode until people within the building are at a safe level.

If the request by power utility 12 to energy management system 18 is withdrawn or ended while elevator system 22 is still in a grid-independent operation mode, energy management system 18 will notify controller 38. Elevator system 22 will then return, under the control of controller 38, to operation using power from grid 14. Grid-independent power source 40 may remain connected to power bus 26 so that it can be recharged to a target state-of-charge level in anticipation of the next time that grid-independent operation will be needed or to reduce the demand of electricity from the grid (i.e. hybrid mode of operation) under normal condition.

With system 10 shown in the Figure, the ability of the power utility to automatically cause customers to reduce demand during periods of high power consumption has been enhanced. Grid-independent operation of elevator systems, in response to a request from the power utility, reduces power demand on the grid, in a seamless fashion. Essential elevator services are maintained during an automatic change between grid-dependent and grid-independent operation.

In other embodiments, a request from the power utility may cause energy management system 18 to select a hybrid mode of operation of elevator system 22, in which power is supplied jointly from grid 14 and from grid-independent power source 40. In this hybrid mode, power source 40 can be used to provide more power than usual, or to reduce peaks from the utility. This allows elevator system 22 to be connected to the grid but using power from the grid at a reduced level.

In addition, to the extent sufficient power is available from elevator system 22 during grid-independent operation, certain non-elevator loads may be powered from elevator system 22 rather than from grid 14.

Although the present invention has been described with reference to preferred embodiments, workers skilled in the art will recognize that changes may be made in form and detail without departing from the scope of the invention. For example, although the Figure shows a regenerative drive formed by converter 24, DC bus 26, and inverter 28, other types of hoist motor drives may also be used with the invention.

## Claims

1. A method of operating an elevator system, the method comprising:
receiving a request from a power utility (12) to reduce electrical demand of a building;
reducing power received by an elevator system from a power distribution system (10) for delivering power from the power utility;
connecting a secondary power source (40) to the elevator system to provide power to the elevator system during a period in which the request to reduce electrical demand of the building continues; and
increasing power received by the elevator system from the power distribution system when the request to reduce electrical demand ends; said method being **characterized by** further comprising:
in response to receiving the request, estimating how long the elevator system can operate independent of power from the power distribution system based upon a state of the secondary power source; and
determining whether to disconnect the elevator system from the power distribution system based upon an estimate of how long the elevator system can operate independent of power from the power distribution system; and
discontinuing operation of the elevator system during the period in which the request to reduce electrical demand of the building continues if energy available from the secondary power source drops below a limit.

2. The method of claim 1, wherein the secondary power source comprises an energy storage system.

3. The method of claim 2 and further comprising:
operating the elevator system as a function of state-of-charge of the energy storage system.

4. The method of claim 3, wherein the elevator system includes a regenerative elevator drive.

5. The method of claim 4 and further comprising:
charging the energy storage system with electrical energy regenerated by the regenerative elevator drive.

6. The method of claim 2 and further comprising:
recharging the energy storage system with power from the power distribution system after the request to reduce electrical demand ends.

7. The method of claim 1 and further comprising:
reconnecting the elevator system to the power distribution system after discontinuing operation when energy available from the secondary power source drops below a limit.

8. The method of claim 1, wherein the secondary power source comprises a generator.

9. A system comprising:
an energy management system (18) for receiving a request from a power utility (12) to reduce electrical demand of a building (16) on a power distribution system (14);
a secondary power source (40); and
an elevator system (22) that is configured, in response to the request received by the energy management system, to operate using power from the secondary power source alone or in conjunction with reduced power from the power distribution system; and **characterized in that** said elevator system is further configured to estimate, in response to the request, how long the elevator system can operate independent of power from the power distribution system based upon a state of the secondary power source; and to determine whether to disconnect the elevator system from the power distribution system based upon an estimate of how long the elevator system can operate independent of power from the power distribution system; and to discontinue operation of the elevator system during the period in which the request to reduce electrical demand of the building continues if energy available from the secondary power source drops below a limit.

10. The system of claim 9 and further comprising:
non-elevator loads (20) controlled by the energy management system based upon the request received from the power utility.

11. The system of claim 9, wherein the secondary power source comprises an energy storage system, and wherein the elevator system includes a controller (38) for operating the elevator system as a function of state-of-charge of the energy storage system.

12. The system of claim 11, wherein the elevator system includes a regenerative elevator drive.

13. The system of claim 12, wherein the controller causes the energy storage system to be charged with electrical energy regenerated by the regenerative elevator drive.

## Patentansprüche

1. Verfahren zum Betreiben eines Aufzugsystems, wobei das Verfahren Folgendes umfasst:
Empfangen einer Anforderung von einem Stromversorger (12), den Elektrizitätsbedarf eines Gebäudes zu senken;
Reduzieren des Stroms, den ein Aufzugsystem von einem Stromverteilungssystem (10) zum Bereitstellen von Strom von dem Stromversorger erhält;
Verbinden einer sekundären Stromquelle (40) mit dem Aufzugsystem, um das Aufzugsystem während eines Zeitraums, in dem die Anforderung zum Reduzieren des Elektrizitätsbedarfs im Gebäude andauert, mit Strom zu versorgen; und
Erhöhen des Stroms, den das Aufzugsystem vom Stromverteilungssystem erhält, wenn die Anforderung zum Reduzieren des Elektrizitätsbedarfs endet; wobei das Verfahren **dadurch gekennzeichnet ist, dass** es ferner Folgendes umfasst:
in Reaktion auf das Empfangen der Anforderung, Schätzen, wie lang das Aufzugsystem unabhängig von dem Strom vom Stromverteilungssystem betrieben werden kann, auf Grundlage eines Zustands der sekundären Stromquelle; und
Bestimmen, ob das Aufzugsystem vom Stromverteilungssystem getrennt werden soll, basierend auf einer Schätzung, wie lange das Aufzugsystem unabhängig von dem Strom vom Stromverteilungssystem betrieben werden kann; und
Aussetzen des Betriebs des Aufzugsystems während des Zeitraums, in dem die Anforderung zum Reduzieren des Elektrizitätsbedarfs im Gebäude andauert, wenn die von der sekundären Stromquelle verfügbare Energie unter einen Grenzwert fällt.

2. Verfahren nach Anspruch 1, wobei die sekundäre Stromquelle ein Energiespeichersystem umfasst.

3. Verfahren nach Anspruch 2 und ferner umfassend:
Betreiben des Aufzugsystems als eine Funktion des Aufladungszustands des Energiespeichersystems.

4. Verfahren nach Anspruch 3, wobei das Aufzugsystem einen regenerativen Aufzugantrieb aufweist.

5. Verfahren nach Anspruch 4 und ferner umfassend:
Aufladen des Energiespeichersystems mit elektrischer Energie, die durch den regenerativen Aufzugantrieb regeneriert wurde.

6. Verfahren nach Anspruch 2 und ferner umfassend:
Wiederaufladen des Energiespeichersystems mit Strom vom Stromverteilungssystem, wenn die Anforderung zum Reduzieren des Elektrizitätsbedarfs endet.

7. Verfahren nach Anspruch 1 und ferner umfassend:
Wiederverbinden des Aufzugsystems mit dem Stromverteilungssystem nach dem Aussetzen des Betriebs, wenn die von der sekundären Stromquelle verfügbare Energie unter einen Grenzwert fällt.

8. Verfahren nach Anspruch 1, wobei die sekundäre Stromquelle einen Generator umfasst.

9. System, umfassend:
ein Energieverwaltungssystem (18) zum Empfangen einer Anforderung von einem Stromversorger (12) zum Reduzieren des Elektrizitätsbedarfs eines Gebäudes (16) an einem Stromverteilungssystem (14);
eine sekundäre Stromquelle (40); und
ein Aufzugsystem (22), das dazu konfiguriert ist, in Reaktion auf die vom Energieverwaltungssystem empfangene Anforderung mit Strom von der sekundären Stromquelle allein oder in Verbindung mit reduziertem Strom vom Stromverteilungssystem betrieben zu werden; und **dadurch gekennzeichnet, dass**
das Aufzugsystem ferner dazu konfiguriert ist, in Reaktion auf die Anforderung auf Grundlage eines Zustands der sekundären Stromquelle zu schätzen, wie lange das Aufzugsystem unabhängig von dem Strom vom Stromverteilungssystem betrieben werden kann; und auf Grundlage einer Schätzung, wie lange das Aufzugsystem unabhängig von dem Strom vom Stromverteilungssystem betrieben werden kann, zu bestimmen, ob das Aufzugsystem vom Stromverteilungssystem getrennt werden soll; und den Betrieb des Aufzugsystems während des Zeitraums auszusetzen, in dem die Anforderung zum Reduzieren des Elektrizitätsbedarfs im Gebäude andauert, wenn die von der sekundären Stromquelle verfügbare Energie unter einen Grenzwert fällt.

10. System nach Anspruch 9 und ferner umfassend:
Nicht-Aufzuglasten (20), die von dem Energieverwaltungssystem auf Grundlage der vom Stromversorger empfangenen Anforderung gesteuert werden.

11. System nach Anspruch 9, wobei die sekundäre Stromquelle ein Energiespeichersystem umfasst, und wobei das Aufzugsystem eine Steuereinrichtung (38) zum Betreiben des Aufzugsystems in Abhängigkeit von einem Aufladungszustand des Energiespeichersystems aufweist.

12. System nach Anspruch 11, wobei das Aufzugsystem einen regenerativen Aufzugantrieb aufweist.

13. System nach Anspruch 12, wobei die Steuereinrichtung veranlasst, dass das Energiespeichersystem mit elektrischer Energie aufgeladen wird, die von dem regenerativen Aufzugantrieb regeneriert wird.

## Revendications

1. Procédé d'exploitation d'un système d'ascenseur, le procédé comprenant :
la réception d'une requête d'un fournisseur d'électricité (12) afin de réduire la demande d'électricité d'un bâtiment ;
la réduction de la puissance reçue par un système d'ascenseur provenant d'un système de distribution d'électricité (10) pour fournir de l'énergie provenant du fournisseur d'électricité ;
la connexion d'une source d'alimentation secondaire (40) au système d'ascenseur pour fournir de l'énergie au système d'ascenseur pendant une période au cours de laquelle la requête de réduire la demande en électricité du bâtiment continue ; et
l'augmentation de l'énergie reçue par le système d'ascenseur provenant du système de distribution d'électricité lorsque la requête de réduire la demande électrique se termine ; ledit procédé étant **caractérisé par** le fait de comprendre en outre :
en réponse à la réception de la requête, l'estimation de la durée pendant laquelle le système d'ascenseur peut fonctionner indépendamment de l'alimentation provenant du système de distribution d'électricité sur la base d'un état de la source d'alimentation secondaire ; et
la détermination de déconnecter ou non le système d'ascenseur du système de distribution d'électricité sur la base d'une estimation de la durée pendant laquelle le système d'ascenseur peut fonctionner indépendamment de l'alimentation provenant du système de distribution d'électricité ; et
l'interruption de l'exploitation du système d'ascenseur au cours de la période pendant laquelle la requête de réduire la demande en électricité du bâtiment continue si l'énergie disponible à partir de la source d'alimentation secondaire est inférieure à un certain seuil.

2. Procédé selon la revendication 1, dans lequel la source d'alimentation secondaire comprend un système de stockage d'énergie.

3. Procédé selon la revendication 2 et comprenant en outre :
l'exploitation du système d'ascenseur en fonction de l'état de charge du système de stockage d'énergie.

4. Procédé selon la revendication 3, dans lequel le système d'ascenseur comprend un entraînement d'ascenseur régénérateur.

5. Procédé selon la revendication 4 et comprenant en outre :
le chargement du système de stockage d'énergie avec l'énergie électrique régénérée par l'entraînement d'ascenseur régénérateur.

6. Procédé selon la revendication 2 et comprenant en outre :
le rechargement du système de stockage d'énergie avec de l'électricité provenant du système de distribution d'électricité après que la requête de réduire la demande d'électricité cesse.

7. Procédé selon la revendication 1 et comprenant en outre :
la reconnexion du système d'ascenseur au système de distribution d'électricité après l'arrêt d'exploitation lorsque l'énergie disponible à partir de la source d'alimentation secondaire est inférieure à un certain seuil.

8. Procédé selon la revendication 1, dans lequel la source d'alimentation secondaire comprend un générateur.

9. Système comprenant :
un système de gestion d'énergie (18) pour recevoir une requête d'un fournisseur d'électricité (12) de réduire la demande en électricité d'un bâtiment (16) sur un système de distribution d'électricité (14) ;
une source d'alimentation secondaire (40) ; et
un système d'ascenseur (22) qui est configuré, en réponse à la requête reçue par le système de gestion d'énergie, pour fonctionner en utilisant de l'électricité provenant de la source d'alimentation secondaire seule ou conjointement avec une alimentation réduite provenant du système de distribution d'électricité ; et **caractérisé en ce que** ledit système d'ascenseur est en outre configuré pour estimer, en réponse à la requête, la durée pendant laquelle le système d'ascenseur peut fonctionner indépendamment de l'alimentation provenant du système de distribution d'électricité sur la base d'un état de la source d'alimentation secondaire ; et pour déterminer s'il faut ou non déconnecter le système d'ascenseur du système de distribution d'électricité sur la base d'une estimation de la durée pendant laquelle le système d'ascenseur peut fonctionner indépendamment de l'alimentation provenant du système de distribution d'électricité ; et pour interrompre l'exploitation du système d'ascenseur pendant la durée pendant laquelle la requête de réduire la demande en électricité du bâtiment continue si l'énergie disponible de la source d'alimentation secondaire est inférieure à un certain seuil.

10. Système selon la revendication 9 et comprenant en outre :
des charges non ascenseur (20) contrôlées par le système de gestion de l'énergie sur la base de la requête reçue du fournisseur d'électricité.

11. Système selon la revendication 9, dans lequel la source d'alimentation secondaire comprend un système de stockage d'énergie, et dans lequel le système d'ascenseur comprend un dispositif de commande (38) pour exploiter le système d'ascenseur en fonction de l'état de charge du système de stockage d'énergie.

12. Système selon la revendication 11, dans lequel le système d'ascenseur comprend un entraînement d'ascenseur régénérateur.

13. Système selon la revendication 12, dans lequel le dispositif de commande amène le système de stockage d'énergie à être chargé avec l'énergie électrique régénérée par l'entraînement d'ascenseur régénérateur.
